# NEUE EUROPÄISCHE PATENTSCHRIFT

(11) **EP 1 128 516 B2**
(45) Veröffentlichungstag und Bekanntmachung des Hinweises auf die Entscheidung über den Einspruch: **25.07.2012**
(45) Hinweis auf die Patenterteilung: 08.07.2009
(21) Anmeldenummer: 01103133.3
(22) Anmeldetag: 09.02.2001
(51) Int. Cl.: H02H 7/085, H02H 6/00

(54) **Verfahren zur Erzeugung eines Klemmschutzsignals und Klemmschutzvorrichtung**
Method for generating an obstruction signal and obstruction detector
Procédé pour produire un signal d'obstruction et détecteur d'obstacle

(30) Priorität: 24.02.2000 DE 10008633
(43) Veröffentlichungstag der Anmeldung: 29.08.2001
(73) Patentinhaber: ROBERT BOSCH GMBH, 70442 Stuttgart (DE)
(72) Erfinder: Dalakuras, Lambros, 75217 Birkenfeld (DE); Schmidt, Frank, 71229 Leonberg (DE)

(56) Entgegenhaltungen:
- WO-A-00/14844
- DE-A- 4 127 047
- FR-A- 2 748 584
- US-A- 5 764 008

## Beschreibung

Die Erfindung betrifft ein Verfahren zur Erzeugung eines Klemmschutzsignals und eine Klemmschutzvorrichtung. Solche Verfahren und Vorrichtungen werden beispielsweise bei Kraftfahrzeugen eingesetzt, um ein Einklemmen durch einen motorbetätigten Verstellantrieb zu verhindern, Insbesondere beider Betätigung von elektrischen Schiebetüren, einer elektrischen Schiebedachverstellung, einem elektrisch betätigten Öffnen/Schließen einer Heckklappe oder bei Fensterhebern ist eine solche Klemmschutzvorrichtung einsetzbar.

Zur Steuerung von Verstellantrieben insbesondere in Kraftfahrzeugen sind zwei Ansätze bekannt. Bei einem Steueransatzwird eine Stellgröße, z.B. eine Spannung vorgegeben, damit sich eine Ausgangsgröße, z.B. eine Drehzahl, einstellt. Neben dieser einfachsten Form wird die rückgekoppelte Form ebenfalls angewendet, bei welcher Sollgrößen mit tatsächlichen Ausgangsgrößen verglichen werden. Hierzu wird ein vorgegebener Sollwertverlauf mit dem tatsächlich erzielten Ausgangssignalen verglichen und durch einen Regler ein entsprechendes Steuersignal für den Verstellantrieb generiert. Vor- und Nachteile beider Ansätze sind hinlänglich aus der Regelungstechnik bekannt.

Aus der US 5,764,008 ist eine Klemmschutzeinheit bekannt, welche einen Regler beinhaltet. Bei der Klemmschutreinheit werden das Steuersignal und die Betriebsspannung des Motors miteinander verglichen, um ein Klemmschutzsignal zu generieren. Hierbei dient das Steuersignal als ein Anzeichen für die Motorlast. Wenn die Motorlast durch ein Einklemmen steigt, so wird dieses durch das Steuersignal angezeigt und eine Betätigung des Klemmschutzes wird ausgelöst.

Die EP 1 256 154 A0 offenbart ein Verfahren zur Erzeugung eines Einklemmschutzsignals und ist als Stand der Technik nah Art 54(3) erwähnt.

Nachteilig an der vorbekannten Regelung eines Klemmschutzes ist, daß mit einem vergleichsweise großen Aufwand hier Betriebsspannung und Stellsignal so miteinander in Beziehung gesetzt werden müssen, daß aus dem Vergleich ein Einklemmen bzw. Klemmen erkannt werden kann. Die hierbei erforderlichen Rechenoperationen sind aufwendig und machen eine Klemmschutrerkennung anfällig für Fehler.

Vor diesem Stand der Technik liegt der Erfindung das Problem zugrunde, ein Verfahren zur Erzeugung eines Klemmschutzsignals und einer Klemmschutzvorrichtung bereitzustellen, die mit geringem Aufwand in zuverlässiger Weise ein Klemmen bzw. ein Verklemmen des Verstellantriebs erkennen können.

Efindungsgemäß wird das Problem durch ein Verfahren zur Erzeugung eines Klemmschutzsignals für einen Verstellantrieb gemäß Anspruch 1 gelöst. Die Verwendung von Modelleinheiten ist in der Elektrotechnik bei der Ermittlung der Drehzahl eines mechanisch kommutierten Gleichstrommotors aus der Patentschrift DE 197 29 238 bekannt. Dort wird aus dem Motorstrom und der Motorspannung ein wahrscheinlicher Wert der aktuellen Drehzahl extrapoliert. Der Extrapolation liegt ein Motor-Zustandsmodell mit motorspezifischen und lastabhängigen Größen zugrunde.

Das erfindungsgemäße Modellsignal stellt ein berechnetes Ausgangssignal des Verstellantriebs dar. Es dient dazu, die tatsächlich erreichte Position des Verstellantriebs mit der berechneten Position des Verstellantriebs zu vergleichen. Liegt ein Abweichen zwischen der tatsächlichen Position und der berechneten Position vor, so stellt dies einen Hinweis auf ein Einklemmen oder Verklemmen des Verstellantriebs dar. Vorteilhaft an dieser Erkennung eines Einklemmens ist, daß durch die Verwendung eines unabhängigen parallelen Modells, ein solches Erkennungsverfahren zuverlässiger wird. Etwaige Abweichungen oder Störungen in dem Verstellantrieb können durch einen Vergleich mit den durch das Modell berechneten Werten erkannt werden.

In einer besonders zuverlässigen Weiterführung des Verfahrens wird das Modellsignal basierend auf dem am Verstellantrieb anliegenden Steuersignal berechnet. Hierdurch liegen am Verstellantrieb und am Modell die gleichen Eingangssignale an. Ein Vergleich der Ausgangssignale ist direkt möglich und erfordert keine weitere Umrechnung der Signale.

Überschreitet die Abweichung zwischen erfaßtem Ausgangssignal und berechnetem Modellsignal einen fest vorgegebenen. Schwellwert, so wird erfindungsgemäß ein Klemmschutzsignal ausgelöst. Das Klemmschutzsignal zeigt einer Antriebs-steuerung an, daß der Antrieb zu unterbrechen oder die Bewegungsrichtung des Antriebs umzukehren ist.

In einer besonders sicheren Weiterführung des Verfahrens liegt zusätzlich noch ein vorbestimmter Sollwert für den Verstellantrieb vor, der mit dem erfaßten Ausgangssignal verglichen wird, um zusätzlich ein zweites Klemmschutzsignal zu erzeugen. Hierbei handelt es sich um einen einfachen Ist-/Sollwert-Vergleich, der parallel zu dem erfindungsgemäßen Verfahren abläuft. Bei einem Verstellantrieb, dessen Sollwerte vorbestimmt sind, erfordert ein solcher zusätzlicher Ist/Sollwert-Vergleich nur einen geringen zusätzlichen Aufwand.

Besonders wirkungsvoll wird das Verfahren, insbesondere durch eine Weiterleitung eines resultierenden Klemmschutzsignals nur dann, wenn beide Klemmschutzsignale vorliegen. Durch die Verwendung von zwei unabhängigen, parallelen Klemmschutz-Erkennungsschritten wird das Verfahren besonders zuverlässig. Insbesondere kann so eine wechselseitige Plausibilitätskontrolle der Klemmschutzsignale stattfinden, um ein unnötiges Auslösen des Klemmschutzes zu verhindern. Die Kombination der beiden Verfahrensschritte nutzt in einfacher Weise die gesamten, über den Verstellvorgang vorhandenen Daten, nämlich Steuersignal, erfaßtes Ausgangssignal und Sollwert-Signal aus, um ein Verklemmen zu erkennen. Hierbei sind keine aufwendigen Analyseschritte der Signale ertorderlich.

Ein weiterer Vorteil des Vertahrens besteht darin, daß nach dem Steuervorgang das Verstellsignal für einen nachfolgenden Steuervorgang aus dem erfaßten Ausgangssignal und vorbestimmten Sollwert berechnet werden kann. Hier ist besonders vorteilhaft, daß beispielsweise zu große Abweichungen von Ist- und Sollwert durch eine Änderung des Stellsignals für den nachfolgenden Steuervorgang vermieden werden kann. Dieser Verfahrensschritt läßt sich mit der erfindungsgemäßen Klemmerkennung auf einfache Weise kombinieren, da die Memmschutzsignale auf den Steuersignalen, den erfaßten Ausgangssignalen und den vorgegebenen Sollwerten beruhen. Mithin ist bei einer Änderung der Stellsignale keine Anpassung an den Klemmschutz erforderlich.

Erfindungsgemäß wird die Aufgabe ebenfalls durch eine Klemmschutzvorrichtung gemäß Anspruch 6 gelöst, die einen Verstellantrieb, eine Modelleinheit, an welcher ein Steuersignal anliegt, und eine Klemmerkennungseinheit aufweist, wobei die Klemmerkennungseinheit ein von der Modelleinheit berechnetes Modellsignal mit einem am Verstellantrieb erfaßten Ausgangssignal vergleicht, um ein Einklemmen zu erkennen. An einer solchen Klemmschutzvorrichtung ist insbesondere vorteilhaft, daß die Modelleinheit das Modellsignal anhand des Stellsignals berechnet. Mithin kann die Modelleinheit das Modellsignal anhand des Stellsignals berechnen. Auch kann die Modelleinheit so parallel zu der Versorgung des Verstellantriebs geschaltet werden. Dies ermöglicht einen einfachen und modularen Aufbau der Klemmschutzvorrichtung, wodurch diese mit geringem Platzbedarf ausgebildet werden kann. Ferner ist an dieser Verwendung der Klemmerkennungseinheit vorteilhaft, daß diese unabhängig von der Modelleinheit angeordnet werden kann, was gerade für Kraftfahrzeuge besondere Vorteile beim Einbau liefert.

Zweckmäßigerweise liegt an Verstellantrieb und Modelleinheitjeweils das gleiche Stellsignal an. Hierdurch wird eine Verschiebung zwischen Modellsignal und tatsächlich erfaßtem Ausgangssignal vermieden.

In einer besonders zuverlässigen Klemmschutzvorrichtung ist eine zweite Klemmerkennungseinheit vorgesehen, die einen vorbestimmten Sollwert für den Verstellantrieb mit dem erfaßten Ausgangssignal vergleicht, um zusätzlich ein Einklemmen zu erkennen. Beide Klemmerkennungseinheiten arbeiten aufgrund ihrer verschiedenen Eingangssignale unabhängig voneinander und können so als eine Plausibilitätskontrolle angesehen werden. Fernerwird durch die Verwendung von zwei Klemmerkennungseinheiten die Zuverlässigkeit der Gesamtvorrichtung wesentlich verbessert und ein irrtümliches Anzeigen eines Verklemmens vermieden.

In einer zuverlässigen und robusten Klemmschutzvorrichtung wird ein resultierendes Klemmschutzsignal nur erzeugt, wenn beide Klemmerkennungseinheiten ein Einklemmen erkannt haben. Durch die UND-Verknüpfung beider Klemmerkennungseinheiten wird vermieden, daß durch Veränderung des Verstellantriebs oder sonstiger Einflüsse zu oft ein Einklemmen erkannt wird.

In einer besonders zweckmäßigen Schutzvorrichtung ist zusätzlich ein Regler vorgesehen, der aus dem erfaßten Ausgangssignal und dem Steuersignal gemeinsam mit dem vorbestimmten Sollwertverlauf ein neues Steuersignal berechnet. Hierdurch können die Steuersignale für den Verstellantrieb und das Modell angepaßt werden, um einerseits Veränderungen des Verstellantriebs zu berücksichtigen, und um andererseits ebenfalls ein zu häufiges Auslösen des Klemmschutzes zu vermeiden.

Nachfolgend werden mit Bezug auf die Figuren zwei besonders vorteilhafte Ausführungsformen einer Klemmschutzvorrichtung beschrieben und näher erläutert. Hierbei zeigt:
- Fig. 1: eine Klemmschutzvorrichtung mit zwei Klemmerkennungseinheiten; und
- Fig. 2: eine Klemmschutzvorrichtung mit zwei Klemmerkennungseinheiten, die zusätzlich einen Regler zum Einstellen der Steuersignale vorsieht.

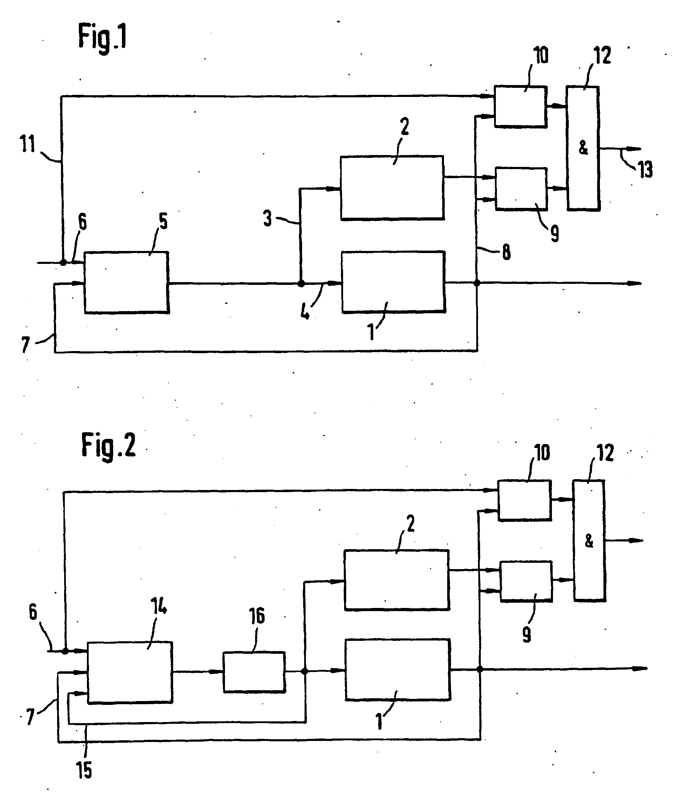

Figur 1 zeigt einen Verstellantrieb 1 und ein Modell 2. An dem Verstellantrieb 1 und dem Modell 2 liegen über den Leitungen 4 bzw. 3 die Stellsignale an. Die Stellsignale werden durch einen Regler 5 generiert. An dem Regler liegt in diesem Ausführungsbeispiel der an der Leitung 6 anliegende vorbestimmte Sollwertverlauf sowie die an der Leitung 7 anliegenden Ausgangssignale des Verstellantriebs 1 an. Für die erfindungsgemäße Klemmschutzvorrichtung können jedoch auch beliebige andere Formen von Reglern und sonstigen Einheiten, die ein Steuersignal für den Verstellantrieb 1 bereitstellen, verwendet werden.

Das am Ende des Verstellantriebs erfaßte Ausgangssignal liegt über die Leitung 8 an den Klemmschutzeinheiten 9 und 10 an. An die Klemmschutzeinheit 9 wird der tatsächlich erfaßte Signalwert mit dem Ausgangssignalwert des Modells 2 verglichen. Hierbei kann der Vergleich zu jedem Zeitpunkt des Regelungsvorganges durchgeführt werden, ohne daß eine Speicherung oder aufwendige Analyse der Zeitverläufe erforderlich ist. Die Klemmschutzeinheit 9 liefert mithin fürjeden Zeitpunkt die Information, ob ein Verklemmen des Verstellantriebs 1 vorliegt oder nicht. Für den Vergleich wird der Absolutbetrag der Differenz zwischen Modellsignal und erfaßtem Ausgangssignal mit einem vorbestimmten Schwellwert verglichen werden. Je nach verwendetem Modell und Verstellantrieb können auch andere Fehlermaße, beispielsweise quadratische oder sonstige Fehler, verwendet werden. Sollten Verstellantrieb 1 und Modell 2 dies erforderlich machen, so kann ohne großen Aufwand eine begrenzte zeitliche Analyse der Werte in der Einheit 9 ausgeführt werden, beispielsweise um Einschwingvorgänge auszugleichen.

In dem in Fig. 1 beschriebenen Ausführungsbeispiel liegt an einer Klemmschutzeinheit 10 neben dem erfaßten Ausgangssignal des Verstellantriebs das Sollwert-Signal des Verstellantriebs über eine Leitung 11 an. Die Klemmerkennungseinheit 10 bestimmt unabhängig von dem Modell 2, ob der Ist-/Sollwert des Verstellantriebs 1 voneinander abweichen. Auch hierbei kann, wie oben beschrieben, ein Verklemmen durch einen Vergleich der an der Einheit 10 anliegenden Signale ermittelt werden. Mit einer nachgeschalteten UND-Verknüpfung 12 wird sichergestellt, daß ein Einklemmsignal 13 nur dann vorliegt, wenn beide Klemmerkennungseinheiten 9 und 10 einen Einklemmvorgang erkannt haben. Das Einklemmsignal 13 wird an eine Steuerung des Antriebs (nicht dargestellt) weitergeleitet, um diesen zu stoppen und/oder seine Bewegungsrichtung umzukehren.

In Fig. 2 ist eine weitere vorteilhafte Ausführungsform der erfindungsgemäßen Klemmschutzvorrichtung dargestellt. Hierbei werden mit Bezug auf diese Zeichnung die Teile, welche eine gleiche Funktion wie in dem ersten Ausführungsbeispiel haben, nicht gesondert erläutert. Besonders vorteilhaft an diesem Ausführungsbeispiel ist die einfache Verbindung zwischen Einklemmschutz und Regelung der Stellsignale.

Der vorgesehene Regler 14 weist drei Eingänge 6, 7 und 15 auf. In diesem Ausführungsbeispiel liegt am Eingang 15 das Stellsignal für den Verstellantrieb an. Aus den drei vorgenannten Signalen bestimmt der Regler 14 ein neues Stellsignal für den nachfolgenden Vorgang. Das Stellsignal dient dazu, den Unterschied zwischen dem vorbestimmten Sollwert, welcher an der Leitung 6 anliegt, und dem tatsächlich erfaßten Ausgangssignal, welches an der Leitung 8 anliegt, zu mimmieren. Mithin zielt Regler 14 darauf ab, ein Auslösen der Klemmschutzeinheit 10 zu vermeiden. Die Anpassung der Stellsignale für den Verstellantrieb 1 durch den Regler 14 trägt mithin Verschleißerscheinungen und Alterungsprozessen an dem Verstellantrieb Rechnung. Auch können besondere Charakteristika des Verstellantriebs, wie beispielsweise eine Klemmwirkung eines Dichtungsgummis und ähnliches, berücksichtigt werden. Die in dem Regler 14 berechneten Stellsignale werden für eine Anwendung in dem nachfolgenden Stellvorgang in einem Speicher 16 abgelegt.

### Bezugszeichenliste

- 1: Verstellantrieb
- 2: Modell
- 3: Leitung für Stellsignale
- 4: Leitung für Stellsignale
- 5: Regler
- 6: Eingangsleitung für Sollwerte
- 7: Leitung
- 8: Leitung
- 9: Klemmschutzeinheit
- 10: Klemmschutzeinheit
- 11: Leitung
- 12: Verknüpfung
- 13: Einklemmsignal
- 14: Regler
- 15: Leitung
- 16: Speicher

## Patentansprüche

1. Verfahren zur Erzeugung eines Klemmschutzsignals für einen Verstellantrieb, an dem ein Steuersignal (3, 4) anliegt und dessen entsprechendes Ausgangssignal (8) erfasst wird, wobei an einer Modelleinheit des Verstellantriebs (2) ein Steuersignal (3, 4) anliegt, wobei die Modelleinheit (2) aus dem anliegenden Steuersignal (3, 4) ein Modellsignal berechnet, welches ein berechnetes Ausgangssignal des Verstellantriebs (2) darstelft, wobei ein Klemmschutzsignal basierend auf dem Vergleich des erfassten Ausgangssignals (8) und dem berechneten Modellsignal erzeugt wird, **dadurch gekennzeichnet, dass** für den Vergleich ein Absolutbetrag der Differenz zwischen dem Modellsignal und dem erfassten Ausgangssignal mit einem vorbestimmten Schwellwert verglichen wird.

2. Verfahren nach Anspruch 1, **dadurch gekennzeichnet, daß** das Modellsignal basierend auf dem Steuersignal, das an dem Verstellantrieb anliegt, berechnet wird.

3. Verfahren nach Anspruch 1 oder 2, **dadurch gekennzeichnet, daß** zusätzlich noch ein vorbestimmter Sollwert für den Verstellantrieb vorliegt und dieser mit dem erfaßten Ausgangssignal verglichen wird, um zusätzlich ein zweites Klemmschutzsignal zu erzeugen.

4. Verfahren nach Anspruch 3, **dadurch gekennzeichnet, daß** ein resultierendes Klemmschutzsignal weitergeleitet wird, wenn beide Klemmschutzsignale vorliegen.

5. Verfahren nach Anspruch 3 oder 4, **dadurch gekennzeichnet, daß** nach dem Steuervorgang das Steuersignal für einen nachfolgenden Steuervorgang aus dem erfaßten Ausgangssignal und dem vorbestimmten Sollwert berechnet wird.

6. Klemmschutzvorrichtung mit einem Verstellantrieb (1), an welchem ein Steuersignal (3, 4) anliegt und der ein Ausgangssignal (8) erzeugt, welches erfasst wird, mit einer Modelleinheit (2) an welcher ein Steuersignal (3, 4) anliegt und mit einer Klemmerkennungseinheit (9), wobei die Modelleinheit (2) aus dem anliegenden Steuersignal (3, 4) ein Modellsignal berechnet, welches ein berechnetes Ausgangssignal des Verstellantriebs (2) darstellt, wobei die Klemmerkennungseinheit (9) ein Einklemmen durch Vergleich des am Verstellantrieb erfassten Ausgangssignals (8) mit dem berechneten Modellsignal erkennt, **dadurch gekennzeichnet, dass** für den Vergleich ein Absolutbetrag der Differenz zwischen dem Modellsignal und dem erfassten Ausgangssignal mit einem vorbestimmten Schwellwert verglichen wird.

7. Klemmschutzvorrichtung nach Anspruch 6, **dadurch gekennzeichnet, daß** am Verstellantrieb (1) und der Modelleinheit (2) jeweils das gleiche Steuersignal anliegt.

8. Klemmschutzvorrichtung nach Anspruch 6 oder 7, **dadurch gekennzeichnet, daß** eine zweite Klemmerkennungseinheit (10) vorgesehen ist, die einen vorbestimmten Sollwert (11) für den Verstellantrieb und das erfaßte Ausgangssignal (8) des Verstellantriebs vergleicht, um zusätzlich ein Einklemmen zu erkennen.

9. Klemmschutzvorrichtung nach Anspruch 8, **dadurch gekennzeichnet, daß** an einem UND-Gatter (12) die Ausgänge der Klemmerkennungseinrichtungen (9, 10) anliegen, um ein resultierendes Klemmschutzsignal (13) zu erzeugen.

10. Klemmschutzvorrichtung nach Anspruch 8 oder 9, **dadurch gekennzeichnet, daß** zusätzlich ein Regler (5) vorgesehen ist, der aus dem erfaßten Ausgangssignal und dem Steuersignal gemeinsam mit dem vorbestimmten Sollwertverlauf ein neues Steuersignal berechnet.

## Claims

1. Method for generating an anti-trapping signal for an adjusting drive to which a control signal (3, 4) is applied and whose corresponding output signal (8) is detected, a control signal (3, 4) being applied to a model unit (2) of the adjusting drive, the model unit (2) using the applied control signal (3, 4) to calculate a model signal which represents a calculated output signal from the adjusting drive (1), an anti-trapping signal being generated on the basis of the comparison of the detected output signal (8) and the calculated model signal, **characterized in that**, for the comparison, an absolute value of the difference between the model signal and the detected output signal is compared with a predetermined threshold value.

2. Method according to Claim 1, **characterized in that** the model signal is calculated on the basis of the control signal applied to the adjusting drive.

3. Method according to Claim 1 or 2, **characterized in that** a predetermined desired value for the adjusting drive is additionally present and is compared with the detected output signal in order to additionally generate a second anti-trapping signal.

4. Method according to Claim 3, **characterized in that** a resultant anti-trapping signal is forwarded if both anti-trapping signals are present.

5. Method according to Claim 3 or 4, **characterized in that**, following the control operation, the control signal for a subsequent control operation is calculated from the detected output signal and the predetermined desired value.

6. Anti-trapping apparatus having an adjusting drive (1) to which a control signal (3, 4) is applied and which generates an output signal (8) which is detected, having a model unit (2) to which a control signal (3, 4) is applied, and having a trapping detection unit (9), the model unit (2) using the applied control signal (3, 4) to calculate a model signal which represents a calculated output signal from the adjusting drive (1), the trapping detection unit (9) detecting trapping by comparing the output signal (8) detected at the adjusting drive with the calculated model signal, **characterized in that**, for the comparison, an absolute value of the difference between the model signal and the detected output signal is compared with a predetermined threshold value.

7. Anti-trapping apparatus according to Claim 6, **characterized in that** the same control signal is respectively applied to the adjusting drive (1) and to the model unit (2).

8. Anti-trapping apparatus according to Claim 6 or 7, **characterized in that** a second trapping detection unit (10) is provided, said unit comparing a predetermined desired value (11) for the adjusting drive and the detected output signal (8) from the adjusting drive in order to additionally detect trapping.

9. Anti-trapping apparatus according to Claim 8, **characterized in that** the outputs of the trapping detection devices (9, 10) are applied to an AND gate (12) in order to generate a resultant anti-trapping signal (13).

10. Anti-trapping apparatus according to Claim 8 or 9, **characterized in that** a controller (5) is additionally provided, said controller calculating a new control signal from the detected output signal and the control signal together with the predetermined desired value profile.

## Revendications

1. Procédé pour générer un signal de protection anti-coincement pour un mécanisme de positionnement auquel est appliqué un signal de commande (3, 4) et dont le signal de sortie (8) correspondant est détecté, un signal de commande (3, 4) étant appliqué à une unité modèle (2) du mécanisme de positionnement, l'unité modèle (2) calculant à partir du signal de commande (3, 4) appliqué un modèle de signal qui représente un signal de sortie calculé du mécanisme de positionnement (1), un signal de protection anti-coincement étant généré en se basant sur la comparaison entre le signal de sortie (8) détecté et le modèle de signal calculé, **caractérisé en ce que**, pour la comparaison, une valeur absolue de la différence entre le modèle de signal et le signal de sortie détecté est comparée avec une valeur seuil prédéfinie.

2. Procédé selon la revendication 1, **caractérisé en ce que** le modèle de signal est calculé en se basant sur le signal de commande qui est appliqué au mécanisme de positionnement.

3. Procédé selon la revendication 1 ou 2, **caractérisé en ce qu'**il existe encore en plus une valeur de consigne prédéfinie pour le mécanisme de positionnement et celle-ci est comparée avec le signal de sortie détecté pour générer en plus un deuxième signal de protection anti-coincement.

4. Procédé selon la revendication 3, **caractérisé en ce qu'**un signal de protection anti-coincement résultant est transmis lorsque les deux signaux de protection anti-coincement sont présents.

5. Procédé selon la revendication 3 ou 4, **caractérisé en ce qu'**après l'opération de commande, le signal de commande pour une opération de commande suivante est calculé à partir du signal de sortie détecté et de la valeur de consigne prédéfinie.

6. Dispositif de protection anti-coincement comprenant un mécanisme de positionnement (1) auquel est appliqué un signal de commande (3, 4) et qui génère un signal de sortie (8), lequel est détecté, comprenant une unité modèle (2) à laquelle est appliqué un signal de commande (3, 4), et comprenant une unité de détection de coincement (9), l'unité modèle (2) calculant à partir du signal de commande (3, 4) appliqué un modèle de signal qui représente un signal de sortie calculé du mécanisme de positionnement (1), l'unité de détection coincement (9) détectant un coincement en comparant le signal de sortie (8) détecté sur le mécanisme de positionnement avec le modèle de signal calculé, **caractérisé en ce que**, pour la comparaison, une valeur absolue de la différence entre le modèle de signal et le signal de sortie détecté est comparée avec une valeur seuil prédéfinie.

7. Dispositif de protection anti-coincement selon la revendication 6, **caractérisé en ce que** le même signal de commande est appliqué respectivement au mécanisme de positionnement (1) et à l'unité modèle (2).

8. Dispositif de protection anti-coincement selon la revendication 6 ou 7, **caractérisé en ce qu'**il existe une deuxième unité de détection de coincement (10) qui compare une valeur de consigne (11) prédéfinie pour le mécanisme de positionnement avec le signal de sortie (8) détecté afin de détecter en plus un coincement.

9. Dispositif de protection anti-coincement selon la revendication 8, **caractérisé en ce que** les sorties des dispositifs de détection de coincement (9, 10) sont appliquées à une porte ET (12) afin de générer un signal de protection anti-coincement (13) résultant.

10. Dispositif de protection anti-coincement selon la revendication 8 ou 9, **caractérisé en ce qu'**il existe en plus un régulateur (5) qui calcule un nouveau signal de commande à partir du signal de sortie détecté et du signal de commande conjointement avec la courbe prédéfinie de la valeur de consigne.
